Europäisches Patentamt

European Patent Office

Office européen des brevets

(19)

(11) **EP 1 321 184 A1**

## (12) EUROPEAN PATENT APPLICATION

(43) Date of publication:
**25.06.2003 Bulletin 2003/26**

(21) Application number: **01830788.4**

(22) Date of filing: **20.12.2001**

(51) Int Cl.⁷: **B01J 19/24**, F28F 3/08,
B01J 35/04, B01J 37/02,
C01B 3/38, C01B 3/48,
H01M 8/06

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **ANSALDO RICERCHE S.r.l. - Società
per lo Sviluppo di Nuove Tecnologie
16152 Genova (IT)**

(72) Inventor: **Ferrari, Elio
c/o Ansaldo Ricerche S.r.l-Società
16152 Genova (IT)**

(74) Representative: **Long, Giorgio et al
Jacobacci & Partners S.p.A.
Via Senato, 8
20121 Milano (IT)**

### (54) Steam reforming reactor

(57)     This invention relates to a reactor for performing a catalytic reforming process. More particularly, this invention relates to a steam reforming reactor.

In particular, this invention relates to a catalytic reforming reactor comprising a shell (2) provided with a first inlet opening (4) for a first fluid, a second inlet opening (6) for a second fluid, a first outlet opening (5) for the said first fluid and a second outlet opening (7) for the said second fluid, one of the said first and second fluids being a heating fluid and the other being a fluid requiring reforming, characterized in that there is located within the said shell (2) a plate heat exchanger (3) in which the said first and the said second fluids pass through separate passages in a heat exchange relationship and in which the passage for the said fluid requiring reforming includes a steam reforming catalyst.

FIG.1

EP 1 321 184 A1

**Description**

This invention relates to a reactor for performing a catalytic reforming process. More particularly, this invention relates to a steam reforming reactor.

As is well known, a process which is widely used in the production of hydrogen is the catalytic steam reforming of methane in accordance with the following reactions:

$$CH_4 + H_2O \rightarrow CO + 3H_2$$

$$CO + H_2O \rightarrow CO_2 + H_2$$

The reaction is endothermic and therefore requires a considerable input of heat from the exterior so that the gases requiring reforming reach temperatures of between 650°C and 850°C.

This process is generally performed in reactors, commonly known as reformers, which comprise a vessel filled with pellet catalyst which is heated externally by a flow of gases produced by a dedicated combustion unit. The fuel (methane) suitably mixed with steam passes through the vessel and reacts within it almost completely as a result of the high contact surface area between the gas and the catalyst. The high contact surface area is ensured by the special conformation of the catalyst pellets and by the porosity of the supporting material.

Although of well-known efficiency, this type of reformer does however have the disadvantage that it is excessively cumbersome, with the effect that its use in some special applications is not to be recommended. The presence of the catalyst filling also has the further disadvantage that it causes excessive head loss in the flow of reagents.

From what has been said it is obvious that a first problem which has to be resolved is that of reducing the dimensions of the plant as much as possible, and these, as stated previously, are partly due to the dimensions of the catalytic reforming module and the corresponding combustion unit. A second problem is that associated with the dispersion of heat, which because of the substantial dimensions of the elements making up the plant and the high operating temperatures (650° - 850°C) , is not at all negligible.

These problems are overcome by a catalytic steam reforming reactor as described in the appended claims.

Further features and advantages of the steam reforming reactor according to this invention will be more apparent from the description of a number of example embodiments provided below, not in any restrictive way and by way of indication with reference to the following figures:

Figure 1 shows a perspective view in partial cross section of the steam reforming reactor according to the invention,
Figure 2 shows a perspective view in partial cross section of a detail of the plate exchanger in the reactor in Figure 1,
Figure 3 shows a detail of Figure 2 in direction A,
Figure 4 shows a perspective view in partial cross section of a second embodiment of the plate exchanger in the reactor according to the invention.

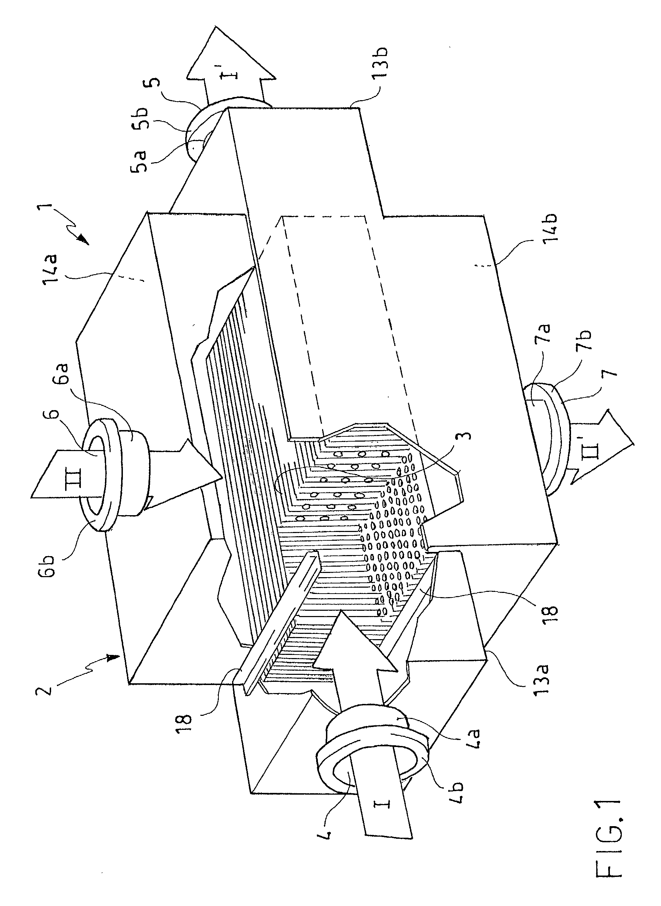

With reference to Figures 1, 2 and 3, the steam reforming reactor according to this invention, which is indicated as a whole by the number 1, comprises a shell 2 in which a plate heat exchanger 3 is housed.

Shell 2 extends along a principal direction and has a first inlet opening 4 for a first fluid at a first end of the body of the shell and a corresponding outlet opening 5 for the same fluid located close to the diametrically opposite end of the shell.

A second inlet opening 6 for a second fluid is located on the upper surface of shell 2, in a position which is substantially intermediate between the said inlet 4 and outlet 5 openings for the said first fluid. A corresponding outlet opening 7, which is located on the lower surface of shell 2 in a position substantially opposite inlet opening 6, corresponds to inlet opening 6 for the said second fluid. In this way it is possible to achieve a crossing flow of the two fluids within heat exchanger 3 along directions I-I' and II-II'.

Corresponding couplings 4a, 5a, 6a, 7a and corresponding flanges 4b, 5b, 6b, 7b for the attachment of delivery and collection pipes for the said fluids are associated with the two inlet openings 4, 6 and the two outlet openings 5, 7 for the fluids.

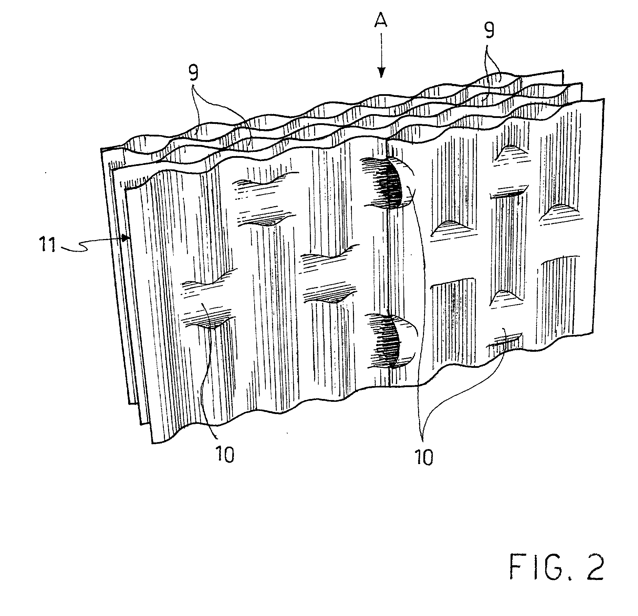

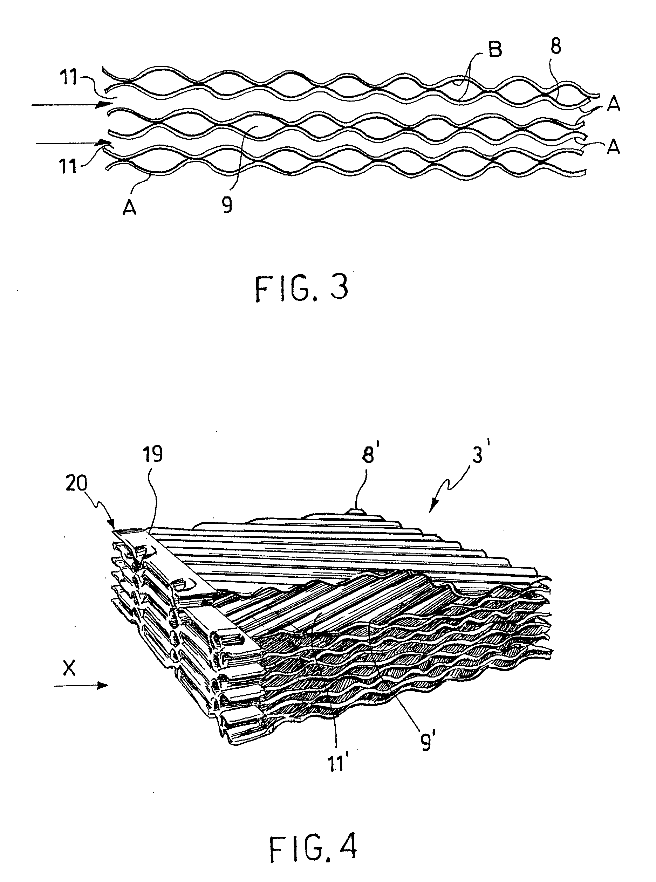

As illustrated in Figures 2 and 3, heat exchanger 3 comprises a plurality of corrugated plates 8 arranged in a set. Corrugated plates 8 face each other in pairs in a mirror-image manner and are welded along two opposite sides. This therefore defines parallel channels 9 located longitudinally along direction A in Figure 2 for each pair of welded plates 8. As illustrated in Figure 2, two adjacent channels 9 are connected at regular intervals by transverse connecting conduits 10 whose function is to increase turbulence in the flow of fluid and therefore to increase heat exchange.

The pairs of welded plates 8 are arranged in sets in such a way that longitudinal channels 9 of two pairs of adjacent plates 8 are in an offset position. In this way passages 11 having an undulating course are formed in which the said first fluid flows in a crossing flow with respect to the second fluid which passes through the said channels 9, as illustrated by the arrows in Figure 3.

Heat exchanger 3 is located within shell 2 such as to form an inlet space 13a for the first fluid located between the said inlet opening 4 for the first fluid and set of plates 8, and an outlet space 13b for the first fluid located between outlet opening 5 for the first fluid and set of plates 8. An upper space 14a is also provided above the said heat exchanger 3 and is connected to the outside of shell 2 by means of the said inlet opening 6 for the second fluid. Similarly, a lower space 14b which communicates with the outside of the shell through the said outlet opening 7 for the second fluid is positioned below heat exchanger 3.

Inlet 13a and outlet 13b spaces for the said first fluid are separated from upper 14a and lower 14b spaces by individual separator means 18, which in the embodiment in Figure 1 are in the form of a bar with an L-shaped cross section.

A film of steam reforming catalyst is located on the side of plates 8 which comes into contact with the fluid requiring reforming. In the embodiment in Figures 1, 2 and 3, the catalyst is deposited on side A of pairs of plates 8, that is on the surface which forms passages 11, while a heating fluid will flow in channels 9 (side B). There is nothing however to prevent the fluids from being swapped and therefore the inside walls of channels 9 from being coated with reforming catalyst.

The catalyst used may be a conventional catalyst for steam reforming based on Ni on a suitable support. The process of depositing the catalyst takes place for example using the technique known as wash-coating. The suspension of catalyst and suitable binders is vaporized, for example by means of a continuous spray irradiator, so as to uniformly cover the surface which requires coating. The thickness of the catalyst layer is continuously checked so as to ensure a constant thickness of between 50 $\mu$m and 200 $\mu$m, preferably between 80 $\mu$m and 150 $\mu$m.

At the end of the stage of catalyst deposition the latter is calcined at an appropriate temperature in such a way as to ensure a sufficient degree of adhesion between the catalyst and plate 8 and the necessary porosity to ensure an adequate contact surface area between the reactive gases and the catalyst.

The steam reforming process is carried out at a temperature of between 500°C and 1100°C, preferably between 650°C and 950°C. The hot fluid introduced into the reactor will therefore generally be at a temperature of more than 750°C, preferably between 750°C and 950°C. This hot fluid may preferably consist of the combustion gases from a suitable combustion reactor located remotely or, preferably, close to the steam reforming reactor of the invention, so that thermal losses are minimized.

Figure 4 shows plate heat exchanger 3' in a different embodiment. This heat exchanger 3', of a known type, comprises a set of corrugated plates 8' having undulations located in oblique directions with respect to the direction X in which the gases enter. The plates are coupled together in pairs and the pairs of plates are stacked in such a way as to form channels 9' with an X-shaped crossing flow, alternating with passages 11' having an undulating course. Pairs of plates 8' are welded at the ends where fluids enter and leave along line 19.

From what has been illustrated above, the advantages of the reactor for catalytic reforming according to the invention immediately become obvious.

The heat exchanger structure makes it possible to optimize heat exchange, therefore making maximum use of the temperature of the combustion gases for reaching and maintaining the reforming temperature. At the same time, the heat exchange structure minimizes the size and weight of the equipment, thus rendering it extremely advantageous in all those applications where reduced size is required, such as for example the application of a reformer in association with a plant having fuel cell stacks.

Secondly, the fact that the reforming catalyst is deposited directly onto the metal plates of the exchanger makes it possible to achieve an appreciable contact surface area with the gases requiring reforming without creating head losses in the flow of those gases, maximizing heat exchange at the same time. The temperature of the reacting gases will therefore be more uniform, in that the reaction takes place at the interface with the catalyst which in turn adheres directly to the plate heated by the combustion gases flowing on the opposite side. There will therefore be no temperature gradient in a radial direction as instead happens in conventional reformers with pellet catalyst.

It is obvious that only particular embodiments of the catalytic reforming reactor according to this invention, to which those skilled in the art will be able to make all modifications necessary for their adjustment to particular applications without thereby going beyond the scope of the protection of this invention, have been described.

In particular, the shape of shell 2, the nature of heat exchanger 3 and the directions of the flows may vary according to requirements. In fact, in addition to the cross-flow arrangement shown above, it is possible to provide co-current or countercurrent parallel flows.

Connecting conduits 10 between channels 9 of heat exchanger 3 may also place more than two adjacent channels 9 in communication, again with a view to increasing turbulence. It is also possible that connecting conduits 10 may be located at irregular intervals along channels 9.

**Claims**

1. Catalytic reforming reactor comprising a shell (2) provided with a first inlet opening (4) for a first fluid, a second inlet opening (6) for a second fluid, a first outlet opening (5) for the said first fluid and a second outlet opening (7) for the said second fluid, one of the said first and second fluids being a heating fluid and the other being a fluid requiring reforming, **characterized in that** there is located within the said shell (2) a plate heat exchanger (3) in which the said first and the said second fluids pass through separate passages (9, 11; 9', 11') in a heat exchange relationship and in which the passage (11, 11') for the said fluid requiring reforming includes a steam reforming catalyst.

2. Reactor according to Claim 1, in which the said first and the said second fluids pass through passages (9, 11; 9', 11') in crossing flows.

3. Reactor according to Claim 1 or 2, in which the said steam reforming catalyst is deposited as a thin layer on the surface of the said passage (11, 11') for the said fluid requiring reforming.

4. Reactor according to Claim 3, in which the said thin layer of catalyst has a thickness of between 50 μm and 200 μm.

5. Reactor according to Claim 4, in which the said thin layer of catalyst has a thickness of between 80 μm and 150 μm.

6. Reactor according to any one of Claims 1 to 5, in which the said heat exchanger (3) comprises a plurality of corrugated plates (8) facing each other in pairs in a mirror-image manner in such a way as to define a plurality of parallel channels (9) for each pair of plates (8), the said pairs of plates (8) being arranged in sets so as to define a plurality of passages (11) having an undulating course in the crossing, countercurrent or co-current directions of flow with respect to the direction of flow in the said channels (9), between one pair of plates (8) and the next.

7. Reactor according to Claim 6, in which at least two adjacent channels (9) are connected by transverse connecting conduits (10).

8. Reactor according to Claim 6 or 7, in which the said pairs of plates (8) are formed by welding along the two flat sides of two plates (8) which face each other in a mirror-image manner.

9. Reactor according to any one of Claims 1 to 8, in which the said shell (2) comprises an inlet space (13a) for the said first fluid located between the said inlet opening (4) for the first fluid and the heat exchanger (3), and an outlet space (13b) for the said first fluid located between the outlet opening (5) for the first fluid and the heat exchanger (3), an upper space (14a) for entry of the said second fluid located above the heat exchanger (3) and communicating with the exterior through the said inlet opening (6) for the second fluid, and a lower space (14b) for exit of the said second fluid located below the heat exchanger (3) and communicating with the exterior through the said outlet opening (7) for the second fluid.

10. Reactor according to Claim 9, in which the said inlet and outlet spaces (13a, 13b, 14a, 14b) for the said first and second fluids are separated by separating means (18).

11. Method of manufacturing the catalytic reforming reactor as illustrated in any one of Claims 1 to 10, the said method comprising a stage of depositing a thin layer of steam reforming catalyst on the surfaces of the said passages (11, 11') designed to come into contact with the said fluid requiring reforming.

12. Method according to Claim 11, in which the said thin layer of catalyst has a thickness of between 50 μm and 200 μm, preferably-between 80 μm and 150 μm.

13. Method according to Claim 11 or 12, in which the said catalyst is deposited on the surfaces of the said passages (11, 11') through the wash-coating technique from a suspension of catalyst and a supporting material.

14. Method according to any one of Claims 11 to 13, in which the said stage of deposition of the thin layer of catalyst is followed by a stage of calcination of the catalyst.

15. Catalytic steam reforming process comprising the stage of placing the fluid requiring reforming in contact with a steam reforming catalyst deposited in a thin layer on a surface heated externally by a hot fluid.

16. Process according to Claim 15, in which the said surface on which the said catalyst is deposited forms part of a plate heat exchanger (3).

17. Process according to Claim 15 or 16, in which the said fluid requiring reforming is a methane/steam mixture and the said steam reforming catalyst is based on nickel.

18. Process according to any one of Claims 15 to 17, in which the said steam reforming process is performed at a temperature of between 500°C and 1100°C, preferably between 650°C and 950°C.

19. Plate heat exchanger (3, 3') comprising passages (9, 11; 9', 11') for a first and a second fluid, **characterized in that** the surfaces of the said passages (11, 11') designed to come into contact with a fluid requiring reforming are coated with a thin layer of steam reforming catalyst.

**20.** Plate heat exchanger (3, 3') according to Claim 19, the said passages (9, 11; 9', 11') having cross flows.

**21.** Heat exchanger (3, 3') according to Claim 19 or 20, in which the said catalyst is a nickel-based catalyst on a suitable support and in which the said thin layer has a thickness of between 50 μm and 200 μm, preferably between 80 μm and 150 μm.

FIG.1

FIG. 2

FIG. 3

FIG. 4

# EP 1 321 184 A1

**European Patent Office**

## EUROPEAN SEARCH REPORT

**Application Number**

EP 01 83 0788

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 198 25 102 A (DBB FUEL CELL ENGINES GMBH) 9 December 1999 (1999-12-09) | 1-3,6, 8-10, 15-20 | B01J19/24 F28F3/08 B01J35/04 |
| Y | | 4,11-14, 21 | B01J37/02 C01B3/38 |
| | * column 1, line 61 - column 2, line 53 * * column 3, line 67 - column 4, line 1 * * column 4, line 36 - line 38 * * column 4, line 67 - column 5, line 15 * * figures 1-5 * | | C01B3/48 H01M8/06 |
| X | EP 1 116 518 A (XCELLSIS GMBH) 18 July 2001 (2001-07-18) * column 4, line 11 - line 40 * * column 6, line 6 - column 7, line 11 * * figures 1-4 * | 1,2,6, 8-10 | |
| X | US 6 117 578 A (LESIEUR ROGER R) 12 September 2000 (2000-09-12) * column 2, line 10 - line 46 * * column 4, line 10 - line 27 * * claims 1-11; figure 2 * | 1,3,11, 13-19 | |
| | | | **TECHNICAL FIELDS SEARCHED (Int.Cl.7)** |
| Y | US 6 197 365 B1 (BACHINGER PATRICK ET AL) 6 March 2001 (2001-03-06) * column 3, line 43 - line 60 * * column 5, line 54 - line 65 * * column 7, line 57 - column 8, line 5 * | 4,11-14, 21 | B01J F28F C01B F28D H01M |
| E | WO 02 28769 A (CATALYTICA ENERGY SYSTEMS ;FAZ CARLOS F (US); IGLESIA ENRIQUE (US)) 11 April 2002 (2002-04-11) * page 12, line 18 - page 18, line 8 * * claims 1-26; figures 1-10; examples 1-4 * | 1-3, 6-11, 13-20 | |

The present search report has been drawn up for all claims

| Place of search | Date of completion of the search | Examiner |
|---|---|---|
| THE HAGUE | 31 May 2002 | Vlassis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

9

**EP 1 321 184 A1**

European Patent
Office

**Application Number**

EP 01 83 0788

---

### CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

### LACK OF UNITY OF INVENTION

The Search Division considers that the present European patent application does not comply with the requirements of unity of invention and relates to several inventions or groups of inventions, namely:

—

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

10

**European Patent**
**Office**

**LACK OF UNITY OF INVENTION**
**SHEET B**

Application Number

EP 01 83 0788

The Search Division considers that the present European patent application does not comply with the requirements of unity of invention and relates to several inventions or groups of inventions, namely:

1. Claims: 1-14,19-21

    Plate type catalytic reforming reactor and method of its manufacuring.

    1.1. Claims: 15-18
    Process of catalytic reforming of a reactant stream over an indirectly heated layer of catalyst.

Please note that all inventions mentioned under item 1, although not necessarily linked by a common inventive concept, could be searched without effort justifying an additional fee.

**ANNEX TO THE EUROPEAN SEARCH REPORT
ON EUROPEAN PATENT APPLICATION NO.** EP 01 83 0788

This annex lists the patent family members relating to the patent documents cited in the above–mentioned European search report.
The members are as contained in the European Patent Office EDP file on
The European Patent Office is in no way liable for these particulars which are merely given for the purpose of information.

31–05–2002

| Patent document cited in search report | | Publication date | Patent family member(s) | | Publication date |
|---|---|---|---|---|---|
| DE 19825102 | A | 09–12–1999 | DE 19825102 A1 | | 09–12–1999 |
| | | | DE 59901268 D1 | | 23–05–2002 |
| | | | WO 9964146 A1 | | 16–12–1999 |
| | | | EP 1091800 A1 | | 18–04–2001 |
| EP 1116518 | A | 18–07–2001 | DE 10001064 A1 | | 02–08–2001 |
| | | | EP 1116518 A2 | | 18–07–2001 |
| | | | US 2001024629 A1 | | 27–09–2001 |
| US 6117578 | A | 12–09–2000 | AU 3493799 A | | 01–11–1999 |
| | | | CA 2328862 A1 | | 21–10–1999 |
| | | | CN 1297589 T | | 30–05–2001 |
| | | | EP 1086505 A1 | | 28–03–2001 |
| | | | JP 2002511383 T | | 16–04–2002 |
| | | | WO 9953561 A1 | | 21–10–1999 |
| US 6197365 | B1 | 06–03–2001 | EP 1043068 A2 | | 11–10–2000 |
| | | | JP 2000301002 A | | 31–10–2000 |
| WO 0228769 | A | 11–04–2002 | WO 0228769 A2 | | 11–04–2002 |

EPO FORM P0459

For more details about this annex : see Official Journal of the European Patent Office, No. 12/82